# EUROPÄISCHE PATENTSCHRIFT

(11) **EP 2 744 440 B1**
(45) Veröffentlichungstag und Bekanntmachung des Hinweises auf die Patenterteilung: **06.03.2019**
(21) Anmeldenummer: 12745474.2
(22) Anmeldetag: 02.08.2012
(51) Int. Cl.: A61C 7/20, A61C 7/00

(54) **VERFAHREN ZUM VERFORMEN EINES KIEFERORTHOPÄDISCHEN DRAHTES AUS EINEM FORMGEDÄCHTNISMATERIAL**
METHOD FOR SHAPING AN ORTHODONTIC WIRE MADE OF A SHAPE-MEMORY MATERIAL
PROCÉDÉ DE DÉFORMATION D'UN FIL MÉTALLIQUE D'ORTHODONTIE CONSTITUÉ D'UN MATÉRIAU À MÉMOIRE DE FORME

(30) Priorität: 17.08.2011 DE 102011081151
(43) Veröffentlichungstag der Anmeldung: 25.06.2014
(60) Teilanmeldung: 18211536.0
(73) Patentinhaber: DW LINGUAL SYSTEMS GMBH, 49152 Bad Essen (DE)
(72) Erfinder: VU, Hoang, Viet-Ha, Julius, 59425 Unna (DE)
(74) Vertreter: Taruttis, Stefan Georg
(86) Internationale Anmeldenummer: PCT/EP2012/065190
(87) Internationale Veröffentlichungsnummer: WO 2013/023935

(56) Entgegenhaltungen:
- DE-A1-102006 048 063
- US-A- 5 456 600
- US-A1- 2004 083 611
- US-A1- 2008 254 403

## Beschreibung

Die Erfindung betrifft ein Verfahren zum Verformen eines kieferorthopädischen Drahtes aus einem Formgedächtnismaterial. Für die kieferorthopädische Behandlung von Patienten mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody auf, der den Drahtbogen aufnimmt.
Zu Beginn einer kieferorthopädischen Behandlung werden häufig kieferorthopädische Drähte aus einem Formgedächtnismaterial in die Brackets eingesetzt, um eine "grobe" Ausrichtung der Zähne zu erreichen. Erst gegen Ende der kieferorthopädischen Behandlung werden bspw. Stahldrähte verwendet, um die Zähne möglichst genau in eine definierte Position zu bewegen.
Damit die kieferorthopädischen Drähte eine gewünschte Kraft auf die Brackets und somit die Zähne übertragen, müssen sie eine bestimmte Geometrie (Zielgeometrie) aufweisen.

Es ist bekannt, kieferorthopädische Drähte aus Stahl mit Hilfe von Zangen in eine gewünschte Zielgeometrie zu überführen.
Dies funktioniert bei kieferorthopädischen Drähten aus einem Formgedächtnismaterial nicht, da sie kein herkömmliches Elastizitätsverhalten bei Verformung aufweisen.
Zu den wichtigsten Formgedächtnismaterialien zählen Cu-Zn-X (X: Si, Sn, Al)- Legierungen und die intermetallische NiTi-Legierung (Nickelgehalt von ca. 55 Gew.-%), wobei die NiTi-Legierung aufgrund günstigerer Eigenschaften eine größere technologische Bedeutung erlangen konnte. Der Formgedächtnis-Effekt beruht auf einer thermoelastischen Martensitumwandlung, einer reversiblen, durch Scherung der Gitterebenen bedingten Phasenumwandlung. Die Abkühlung der Hochtemperatur-Phase, genannt Austenit, unter die legierungsspezifische Martensitstarttemperatur führt zu der Phasenumwandlung ohne Gestaltänderung und ohne irreversible plastische Verformung, wie es bei Stählen der Fall ist. Formgedächtnislegierungen lassen sich im martensitischen Zustand leicht verformen; die reversible Verformung kann bis zu 8% bei NiTi betragen. Diese Verformung ist bleibend, solange sich die Legierung im martensitischen Zustand befindet. Die Erwärmung auf eine Temperatur oberhalb der legierungsspezifischen Austenitstarttemperatur führt dann zur Rückstellung der ursprünglichen Gestalt.

Die DE 195 40 755 C2 beschreibt die gattungsgemäße Herstellung eines Bogendrahts aus Formgedächtnismaterial durch Eingipsen von Übertragungselementen, die in Slots von Brackets auf einem Modell einer Zielkonfiguration eingefügt sind, Lösen der Übertragungselemente von den Slots, Ersetzen von Abschnitten der Übertragungselemente durch Draht-Aufnahmevorrichtungen und Anordnen eines Drahtbogens in diese mit anschließendem Erwärmen zur dauerhaften Verformung.

Um einen kieferorthopädischen Draht aus einem Formgedächtnismaterial in eine Zielgeometrie zu überführen, wird dieser in einer speziellen Backform in die gewünschte Zielgeometrie gebracht und dann auf eine für das Formgedächtnismaterial spezifische Sprungtemperatur erhitzt. Anschließend wird der kieferorthopädische Draht wieder abgekühlt und in eine kieferorthopädische Apparatur eines Patienten, bspw. festsitzende Lingual- oder Bukkalbrackets, unter Verformung eingesetzt. In dem Mund des Patienten wird der kieferorthopädische Draht wieder erwärmt und erinnert sich an seine Zielgeometrie, in die er sich dann zurückverformen will. Während dieser Verformung übt der kieferorthopädische Draht eine Kraft auf die Brackets aus, wodurch die zugehörigen Zähne bewegt werden.

Ein Nachteil bei der Verformung eines kieferorthopädischen Drahtes aus einem Formgedächtnismaterial in eine Zielgeometrie ist, dass das Verfahren sehr aufwändig und somit kostenintensiv ist.

Die DE 698 15 155 T2 beschreibt die Berechnung von Kräften, die von einem Bogendraht ausgeübt werden sollen, in einem virtuellen Modell.

Die US 2004/0083611 A1 beschreibt die Herstellung einer Halterung für einen kieferorthopädischen Draht auf Basis einer computergestützten Berechnung der numerischen Beschreibung der Form des Drahts. Die numerische Beschreibung der Drahtform dient zur Herstellung einer Form, in die der Draht zur Fixierung eingelegt wird.

Die US 5,456.600 A beschreibt die Berechnung der Form eines Bogendrahts in Form eines Computermodells. Auf Basis des Computermodells kann dann ein Draht geformt werden oder eine Form für das Erwärmen eines Drahts gefräst werden, die den Draht für einen Erwärmungsschritt hält.
Die US 2008/0254403 A1 beschreibt die Herstellung einer Form zum Halten eines kieferorthopädischen Drahts, bei der Drahtfixierabschnitte in die konvexe Außenfläche eines U-förmigen Metallstücks gefräst sind, auf Basis eines Computermodells für den Bogendraht. Die DE 10 2006 048 063 A1 beschreibt Brackets mit jeweils zwei Slots zur Aufnahme von Bogendrähten und gibt an, dass ein Bogendraht durch Berechnen seiner Geometrie aus einer digitalen Darstellung von Einzelzahnsegmenten mit anschließendem Ausbilden des Bogendrahts auf Basis seiner berechneten Geometrie hergestellt werden kann.

### Aufgabe der Erfindung

Die Aufgabe der vorliegenden Erfindung liegt darin, ein alternatives Verfahren zur Herstellung eines kieferorthopädischen Drahts aus Formgedächtnismaterial in einer Zielgeometrie bereitzustellen, insbesondere ein einfacheres und kostengünstigeres Verfahren anzugeben, das zu einem kieferorthopädischen Draht aus einem Formgedächtnismaterial in einer Zielgeometrie führt.

### Allgemeine Beschreibung der Erfindung

Die Aufgabe wird erfindungsgemäß durch ein Verfahren mit den Merkmalen des Anspruchs 1 gelöst.

Bevorzugte Ausführungsformen der Erfindung sind in den abhängigen Ansprüchen 2-15 offenbart.

Weitere Merkmale, Einzelheiten und Vorzüge der Erfindung ergeben sich aus den Ansprüchen und der nachfolgenden Beschreibung bevorzugter Ausführungsformen sowie anhand der Zeichnungen. Es zeigen schematisch:
- Fig. 1: eine perspektivische Ansicht eines Ziel-Set-Ups mit Brackets,
- Fig. 2: eine Draufsicht auf das Ziel-Set-Up der Fig. 1,
- Fig. 3: einen Screenshot einer Software zur Verarbeitung der Draufsicht der Fig.2,
- Fig. 4: einen vergrößerten Ausschnitt der Fig. 3, wobei zusätzlich Orientierungshilfen zur Identifizierung der Slots der Brackets dargestellt sind,
- Fig. 5a: eine schematische Querschnittsansicht einer Backform in einer Abwicklung entlang einer Bogenlinie und einen Fräskopf, wobei Freiräume für den kieferorthopädischen Draht in die Backform gefräst sind,
- Fig. 5b: die Ansicht von Fig. 5a), wobei jedoch Drahtfixierabschnitte zwischen den Freiräumen gefräst sind,
- Fig. 6: eine Draufsicht auf eine fertige Backform, und
- Fig. 7: die Backform der Fig. 6, in die ein kieferorthopädischer Draht eingelegt ist.

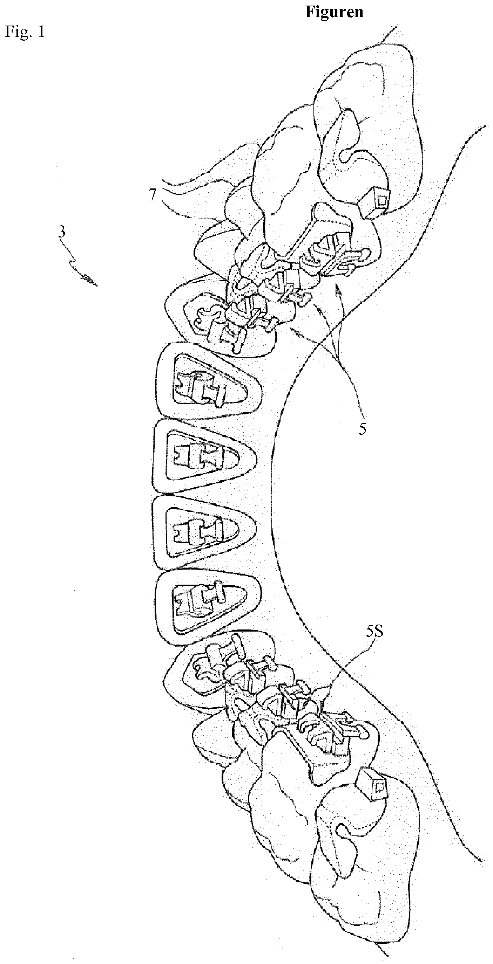

Von einem Patienten wird ein Gipsabdruck seines Unterkiefers erstellt, der kieferorthopädisch behandelt werden soll. Der Gipsabdruck wird zersägt, wobei die Zähne separiert werden. Anschließend werden die Zähne in einem Ziel-Set-Up 3, s. Fig. 1, angeordnet, das das gewünschte Behandlungsergebnis am Ende der Behandlung zeigen soll. In dem Ziel-Set-Up 3 der Fig. 1 sind auf die Zähne 7 Lingualbrackets 5 geklebt. Am Ende der kieferorthopädischen Behandlung sollten alle Slots 5S der Lingualbrackets 5 i.wstl. in einer Ebene, der sog. Slotebene, liegen, wie in Fig. 1 gezeigt.

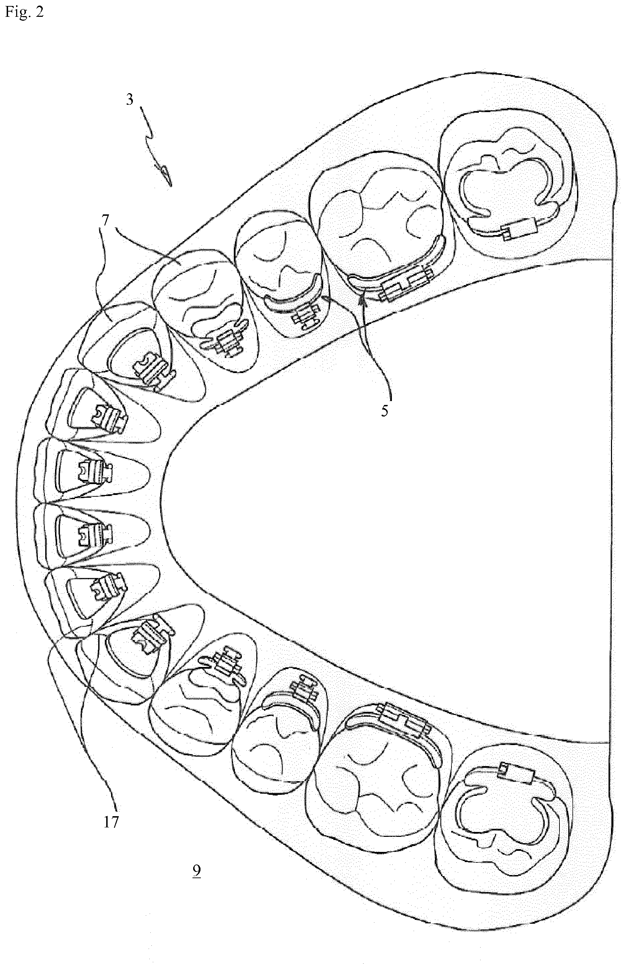

Von dem Ziel-Set-Up 3 der Fig. 1 wird wie folgt ein Foto (schematisch in Fig. 2) aus der Draufsicht erstellt: Das Ziel-Set-Up 3 wird zentrisch unter einer Dombeleuchtung angeordnet, um eine gleichmäßige Ausleuchtung desselben zu erreichen. Eine Kamera mit einer Optik wird auf das Ziel-Set-Up 3 ausgerichtet, um aus der Draufsicht ein Foto desselben zu machen.

Der Kamera ist ein Projektor für ein Laserband 17 zugeordnet, wobei das Laserband 17 die Brennebene der Optik der Kamera zeigt. Die vertikale Höhe des Ziel-Set-Ups 3 wird mit Hilfe des Laserbandes 17 so eingestellt, dass die Slotebene der Lingualbrackets 5 des Ziel-Set-Ups 3 mit dem Laserband 17 auf einer vertikalen Höhe ist.

Sobald die Optik der Kamera scharf auf die Slotebene der Lingualbrackets 5 des Ziel-Set-Ups 3 eingestellt ist, wird eine Aufnahme mit der Kamera erstellt. Fig. 2 zeigt schematisch das Foto des Ziel-Set-Ups 3 der Fig. 1 aus der Draufsicht.

In einem nächsten Schritt wird das Foto aus der Kamera, vorliegend eine Digitalkamera, in einen Computer übertragen und dort mit Hilfe einer selbst erstellten Software am Bildschirm wie folgt bearbeitet. Die Software dient i.wstl. dazu, die Lage der einzelnen Slots zu identifizieren und zu bestimmen und anschließend auszugeben. Dazu wird wie folgt vorgegangen:
In der Software wird zunächst der Patient mit seinen patientenspezifischen Daten, wie bspw. Name und Geburtsdatum, angelegt. Dann wird angegeben, ob das Foto eines Ziel-Set-Ups eines Unterkiefers oder eines Oberkiefers bearbeitet werden soll. Vorliegend wird angegeben, dass das Foto eines Ziel-Set-Ups 3 eines Unterkiefers bearbeitet werden soll und dann der Speicherort des Fotos auf dem Computer angegeben, woraufhin das Foto in die Software geladen wird.

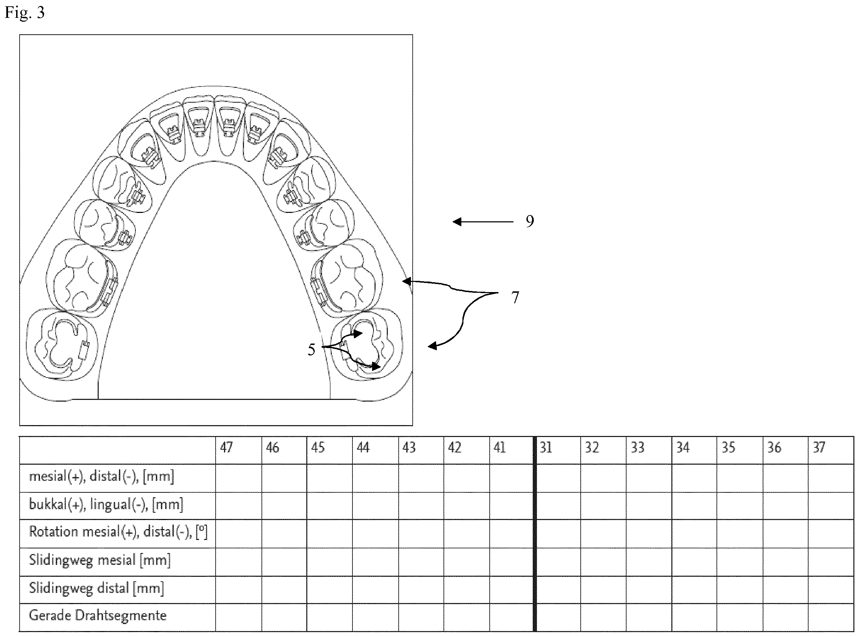

Auf dem Bildschirm wird folgend die Fig. 3 dargestellt. Der Bildschirm ist zweigeteilt: In der oberen Hälfte wird die Aufnahme der Fig. 2 dargestellt (eine 2dim-Abbildung 9 des Ziel-Set-Ups mit Brackets in der Draufsicht). In der unteren Hälfte findet sich eine Matrix, in der für jeden Zahn des Unterkiefers eine Spalte vorgesehen ist (von 47 über 41 und 31 nach 37). In einer weiteren Spalte (in Fig. 3 ganz links) sind zeilenweise einzelne Parameter für jeden dieser Zähne aufgeführt, für die für die einzelnen Zähne jeweils Werte eingegeben werden können, wie weiter unten beschrieben.

In einem nächsten Schritt klickt der Benutzer in der Matrix die Nummer des Zahns an, für den er den Slot des zugehörigen Brackets in dem Foto identifizieren möchte, d.h. der Benutzer klickt bspw. auf die Zahl "47" in der Matrix, um folgend für diesen Zahn die Lage des Slots zu bestimmen. Der Software ist nun bekannt, für welchen Zahn die Lage des Slots des auf dem Zahn angeordneten Brackets identifiziert werden soll.

In der Software sind für jeden Zahn zugehörige Brackets von verschiedenen Herstellern mit ihren jeweiligen Slotabmessungen hinterlegt und die Software fragt in einem nächsten Schritt den Benutzer, welches Bracket von welcher Firma auf dem Zahn angeordnet ist, indem zunächst der Hersteller und dann das Bracketmodell von dem Benutzer abgefragt wird. Nachdem der Benutzer der Software bekannt gegeben hat, welcher Brackettyp von welchem Hersteller auf dem Zahn angeordnet ist, ist dieser Schritt beendet. Der Software ist nun bekannt, welches Bracket mit welchen Slotabmessungen dem Zahn zugeordnet ist.

In einem nächsten Schritt klickt der Nutzer auf das Bracket des Zahns 47 in dem in Fig. 3 oben dargestellten Foto, um die grobe Lage des Brackets der Software mitzuteilen.

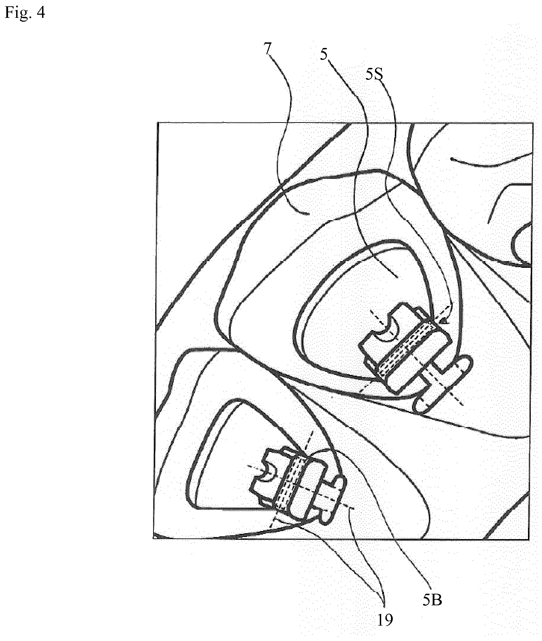

Nun ist der Software bekannt, an welcher Stelle für welchen Zahn welches Bracket grob sitzt, und sie blendet an dieser Stelle einen Basisslotkörper 5B des entsprechenden Brackets 5 und ein zugehöriges Fadenkreuz 19 ein, s. Fig. 4. Der Basisslotkörper 5B gibt allgemein die innere Kontur des Slots 5S des Brackets 5 wider und ist vorliegend ein Rechteck. Die beiden Linien des Fadenkreuzes 19 verlaufen jeweils parallel zu einer kurzen bzw. langen Seite des rechteckigen Basisslotkörpers 5B und der Mittelpunkt des Fadenkreuzes 19 liegt im Schwerpunkt des Basisslotkörpers 5B.

Das Fadenkreuz 19 dient als Orientierungshilfe, um den Basisslotkörper 5B in dem Slot 5S des Brackets 5 des Zahns 47 in einem nächsten Schritt geeignet von Hand zu positionieren, d.h. den Basisslotkörper 5B in Deckung zu bringen mit der inneren Kontur des Slots 5S des Brackets 5 in dem Foto. Zu diesem Zweck wird der Basisslotkörper 5S auf dem Foto per Maus so lange verschoben und gedreht, bis der Basisslotkörper 5S zur Deckung kommt mit der inneren Kontur des Slots 5S in dem Foto, wie bspw. in Fig. 4 für die Zähne 42 und 43 gezeigt.

Da das Foto des Ziel-Set-Ups 3 in einer definierten Brennebene der Optik der Kamera gemacht wird, ist der Maßstab der Abbildung desselben in dem Foto bekannt und der Basisslotkörper 5B in der Software ist auf diesen Maßstab abgestimmt, wodurch sich die Deckung von Basisslotkörper 5S und dem Slot 5S in dem Foto ergibt.

Nun ist die Lage des Slots 5S mit Hilfe des Basisslotkörpers 5B für das Bracket 5 des Zahns 47 definiert und die zugehörigen Daten werden automatisch in der Software hinterlegt. Die in der Software hinterlegten Daten umfassen mindestens: Zahn 47 und Lage sowie Abmessung des Slots 5S. Wahlweise können auch der Brackettyp und der Brackethersteller mit abgespeichert werden.

Die zuvor beschriebenen Schritte zur Identifikation der Lage des Slots 5S mit Hilfe des Basisslotkörpers 5B für den Zahn 47 werden folgend für jeden zu behandelnden Zahn des Unterkiefers wiederholt, wodurch die Lage eines jeden Slots 5S identifiziert ist.

Ist die Identifikation der Lage für alle Slots 5S abgeschlossen, besteht mit Hilfe der in Fig.3 unten dargestellten Matrix die Möglichkeit, für jeden Slot eines Brackets eines jeden Zahns den Wert von dort aufgeführten Parametern zu ändern:
Ist es in einem Beispiel erwünscht, die Position des Slots mesial bzw. distal zu verschieben, so kann in die zweite Zeile der in Fig. 3 unten dargestellten Tabelle der gewünschte Wert in mm eingetragen werden, der zusätzlich gewünscht wird.

Analog kann mit einem Eintrag in der dritten Zeile der in Fig. 3 unten dargestellten Tabelle die Slotposition bukkal bzw. lingual verschoben werden.

Durch einen Eintrag in die vierte Zeile der in Fig. 3 unten dargestellten Tabelle kann der Slot um seinen Mittelpunkt in mesialer bzw. distaler Richtung gedreht werden, wobei dazu der gewünschte Winkel in [°] einzutragen ist, der zusätzlich gewünscht wird.

Ist es in einem weiteren Beispiel gewünscht, dass der Draht 1 in dem Slot 5S des Brackets 5 des Zahns 47 mesial mehr Slidingweg hat, so kann in die Spalte 47 in der Zeile "Slidingweg mesial" (fünfte Zeile) der gewünschte Wert in mm eingetragen werden, der zusätzlich gewünscht wird.

Analog kann, wenn distal mehr Slidingweg gewünscht ist, der entsprechende Wert in die nächste (sechste) Zeile eingetragen werden, der zusätzlich gewünscht wird.

Sind in die Matrix alle notwendigen Korrekturen eingetragen, so sind die Identifikation der Lage der Slots 5S und die notwendigen Korrekturen davon abgeschlossen. Auf Anforderung des Benutzers schreibt die Software nun in einem nächsten Schritt alle Daten in eine Datei. Die Datei enthält somit mindestens für jeden zu behandelnden Zahn: Nummer des Zahns, die Lage sowie Abmessung des Slots 5S des zugehörigen Brackets 5, einschließlich der vorgenommenen Korrekturwerte. Wahlweise können auch weitere Daten, wie bspw. der Name des Patienten, der Brackettyp und der Brackethersteller mit abgespeichert werden.

Als nächstes wird mit Hilfe dieser Datei eine Backform 11 (vorliegend eine Aluminiumplatte) für den kieferorthopädischen Draht 1 wie folgt erstellt:
Eine Aluminiumplatte mit den Abmessungen 79,5mm x 79,5mm x 2,5mm wird in eine CNC-Fräsmaschine eingelegt und dort fixiert. Die Aluminiumplatte weist sechs ebene Oberflächen auf.

In die CNC-Fräsmaschine wird ferner die o.g. Datei (mit den Daten zur Lage usw. der Slots) geladen.

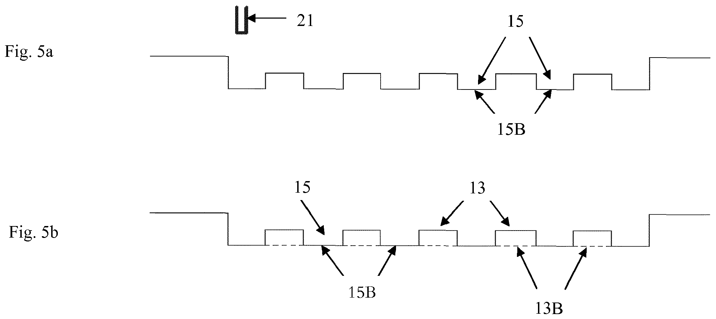

Mit Hilfe eines zylindrischen Fräskopfes 21 mit einer Breite von 2mm wird in die Aluminiumplatte die Bogenform gefräst, s. Fig. 5a, die eine Abwicklung der Bogenform zeigt. Der Fräskopf 21 fräst die Bogenform nicht auf einer Höhe in die Aluminiumplatte, sondern lässt Bereiche stehen, die den Slots entsprechen und in denen der kieferorthopädische Draht 1 während des Backens gehalten werden muss, den sog. Drahtfixierabschnitten 13. Die Fig. 5a zeigt dementsprechend mehrere Freiräume 15 und zwischen den Freiräumen 15 erhöhte Bereiche.

Nachdem der Fräskopf 21 die Bogenform in die Aluminiumplatte gefräst hat, wird er automatisch gegen einen mit einem kleineren Durchmesser ausgetauscht, dessen Durchmesser etwas größer als der des kieferorthopädischen Drahtes 1 ist.

Dieser Fräskopf fräst in die zwischen zwei Freiräumen gebildeten erhöhten Bereiche einen Boden 13B, wodurch Drahtfixierabschnitte 13 zwischen den Freiräumen 15 gebildet sind, in denen der kieferorthopädische Draht 1 während des Backens desselben gehalten wird.

Die Böden 13B der Drahtfixierabschnitte 13 und die Böden 15B der Freiräume 15 liegen dann auf einer Höhe, wie die Fig. 5b zeigt.

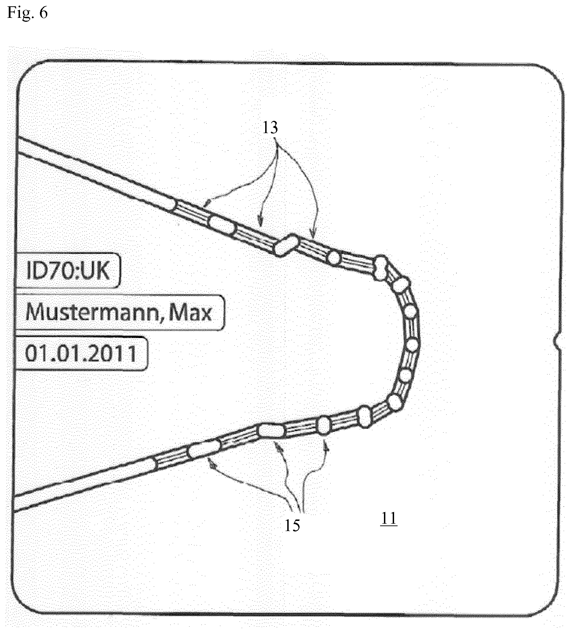

Die Aluminiumplatte weist nun Drahtfixierabschnitte 13, von denen der kieferorthopädische Draht 1 gehalten werden kann, und Freiräume 15, innerhalb derer der kieferorthopädische Draht 1 nicht gehalten werden kann, auf. Die Drahtfixierabschnitte 13 entsprechen den späteren Slots 5S der Brackets. Die Aluminiumplatte bildet auf diese Weise die Backform 11 für den kieferorthopädischen Draht 1. In Fig. 6 ist die fertige Backform in der Draufsicht mit ihren Drahtfixierabschnitten 13 und ihren Freiräumen 15 gezeigt. Ferner ist in die Backform 11 noch das Erstellungsdatum der Backform sowie der Name und der Vorname des Patienten sowie eine Fallnummer gefräst, wobei letztere noch die Angabe UK umfasst, um anzuzeigen, dass es sich um das Unterkiefermodell des Patienten handelt.

Nachdem die Backform 11 erstellt ist, wird der kieferorthopädische Draht 1 in die Backform 11 von Hand eingelegt, d.h. der kieferorthopädische Draht 1 wird in die Drahtfixierabschnitte 13 eingelegt und liegt dann plan auf den Böden 13B und 15B auf.

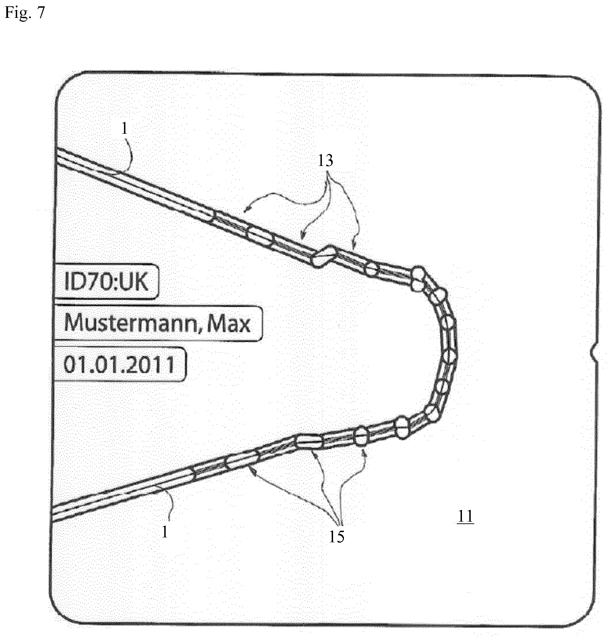

Fig. 7 zeigt die Backform der Fig. 6, in die zusätzlich ein kieferorthopädischer Draht 1 eingelegt ist. Die distal, nach dem letzten Drahtfixierabschnitt 13 überstehenden Drahtabschnitte (in Fig. 7 unten) können vom Behandler je nach Bedarf gekürzt werden.

In einem nächsten Schritt wird der auf diese Weise in der Backform 11 angeordnete kieferorthopädische Draht 1 in einem Backofen in der Backform 11 gebacken, wodurch der kieferorthopädische Draht 1 auf diese Geometrie, d.h. die gewünschte Zielgeometrie, programmiert wird. Nun kann der kieferorthopädische Draht 1 in eine kieferorthopädische Apparatur eines Patienten eingesetzt werden.

Unter dem Begriff "kieferorthopädische Apparatur" ist im Rahmen der vorliegenden Anmeldung die Anordnung aus Lingual- oder Bukkalbrackets auf kieferorthopädisch zu behandelnden Zähnen eines Patienten zu verstehen.

Die Zielgeometrie ist die Geometrie des kieferorthopädischen Drahtes, in der der behandelnde Kieferorthopäde den kieferorthopädischen Draht haben will, damit er im in der kieferorthopädischen Apparatur eingesetzten Zustand die gewünschte Bewegung der zu behandelnden Zähne bewirkt.

Im Schritt b) werden bevorzugt Lingualbrackets auf den zu behandelnden Zähnen angeordnet. Alternativ können auch Bukkalbrackets auf den Zähnen angeordnet werden.

### Bezugszeichenliste

- 1: kieferorthopädischer Draht
- 3: patientenspezifisches Ziel-Set-Up eines Unterkiefers eines Patienten
- 5: (Lingual-) Bracket
- 5B: Basisslotkörper
- 5S: Slot des Brackets
- 7: Zahn
- 9: 2dim-Abbildung des Ziel-Set-Ups mit Brackets in der Draufsicht
- 11: Backform
- 13: Drahtfixierabschnitt
- 13B: Boden eines Drahtfixierabschnitts
- 15: Freiraum
- 15B: Boden eines Freiraums
- 17: Laserband
- 19: Fadenkreuz
- 21: Fräskopf

## Patentansprüche

1. Verfahren zum Verformen eines kieferorthopädischen Drahtes (1) aus einem Formgedächtnismaterial in eine Zielgeometrie zum passenden Einsetzen in eine patientenspezifische kieferorthopädische Apparatur mit folgenden Schritten:
a. Erstellen eines patientenspezifischen Ziel-Set-Ups des Ober- oder Unterkiefers des Patienten,
b. Anordnen von Brackets (5) auf zu behandelnden Zähnen im Ziel-Set-Up,
c. Anfertigen eines zweidimensionalen Fotos als 2dim-Abbildung des Ziel-Set-Ups mit Brackets (5) in der Draufsicht,
d. Laden der Abbildung in eine Datenverarbeitungsanlage,
e. Identifizieren der Lage der Slots (5S) der Brackets (5) in der Abbildung,
f. Exportieren von Daten der Lage der Slots (5S) aus der Datenverarbeitungsanlage,
g. Erstellen einer Backform (11) für den Formgedächtnisdraht, wobei mit Hilfe der Daten Drahtfixierabschnitte (13) in der Backform generiert werden, die den Draht in den zu den Slots (5S) korrespondierenden Bereichen während des Backens halten,
h. Einsetzen des Drahtes in die Backform und
i. Backen des Drahtes,
wobei für den Schritt c) ein Lichtband in das Ziel-Set-Up
projiziert wird, das die Brennebene der Optik für die Anfertigung des Fotos zeigt, und das Lichtband in die Slotebene projiziert wird, wodurch die Slots (5S) scharf in der Abbildung dargestellt werden.

2. Verfahren nach Anspruch 1, **dadurch gekennzeichnet, dass** im Schritt a) ein Ziel-Set-Up aus Gips oder ein virtuelles Ziel-Set-Up erstellt wird.

3. Verfahren nach Anspruch 1 oder 2, **dadurch gekennzeichnet, dass** im Schritt b) Lingualbrackets auf den zu behandelnden Zähnen des Ziel-Set-Ups angeordnet werden.

4. Verfahren nach einem der vorangehenden Ansprüche, **dadurch gekennzeichnet, dass** im Schritt c) das zweidimensionale Foto unter Verwendung einer Kamera mit einer Optik angefertigt wird.

5. Verfahren nach Anspruch 1 oder 4, **dadurch gekennzeichnet, dass** im Schritt c) als Abbildung ein digitales Foto angefertigt wird.

6. Verfahren nach einem der vorangehenden Ansprüche, **dadurch gekennzeichnet, dass** im Schritt d) ein digitales Foto oder ein Scan eines analogen Fotos in die Datenverarbeitungsanlage geladen wird.

7. Verfahren nach einem der vorangehenden Ansprüche, **dadurch gekennzeichnet, dass** als Datenverarbeitungsanlage ein Computer, insbesondere ein Desktop PC, verwendet wird.

8. Verfahren nach einem der vorangehenden Ansprüche, **dadurch gekennzeichnet, dass** das Identifizieren im Schritt e) von Hand oder automatisch, insbesondere mit Hilfe von Morphingalgorithmen, erfolgt.

9. Verfahren nach einem der vorangehenden Ansprüche, **dadurch gekennzeichnet, dass** nach dem Identifizieren im Schritt e) die Lage mindestens eines Slots (5S) in der Okklusionsebene von Hand verändert wird, insbesondere nach mesial, distal, lingual oder bukkal, per Rotation oder Kombinationen davon.

10. Verfahren nach einem der vorangehenden Ansprüche, **dadurch gekennzeichnet, dass** nach dem Identifizieren im Schritt e) die Länge mindestens eines Slots mesial und/oder distal erhöht oder verringert wird.

11. Verfahren nach einem der vorangehenden Ansprüche, **dadurch gekennzeichnet, dass** das Exportieren im Schritt f) das Schreiben der Daten in eine Computerdatei ist.

12. Verfahren nach einem der vorangehenden Ansprüche, **dadurch gekennzeichnet, dass** im Schritt g) eine Backform aus einer Metallplatte, insbesondere aus Stahl oder Aluminium, erstellt wird.

13. Verfahren nach Anspruch 12, **dadurch gekennzeichnet, dass** im Schritt g) die Drahtfixierabschnitte für den Draht in die Metallplatte gefräst werden und jeweils ein Freiraum für den Draht zwischen benachbarte Drahtfixierabschnitte gefräst wird, in dem der Draht nicht gehalten wird.

14. Verfahren nach Anspruch 13, **dadurch gekennzeichnet, dass** die Böden der Drahtfixierabschnitte und die Böden der Freiräume auf dieselbe Höhe gefräst werden, wodurch der Draht eben in die Backform eingelegt werden kann.

15. Verfahren nach einem der vorangehenden Ansprüche, **dadurch gekennzeichnet, dass** der Draht im Schritt h) von Hand in die Backform eingesetzt wird.

## Claims

1. Process for forming an orthodontic wire (1) from a memory shape material into a target geometry for a fitting introduction into a patient specific orthodontic apparatus having the following steps:
a. Generating a patient specific target set-up of the upper or lower jaw of the patient,
b. arranging brackets (5) on teeth to be treated in the target set-up,
c. producing a two-dimensional photo as a 2-dim representation of the target set-up with brackets (5) in a top view,
d. loading the representation into a data processing apparatus,
e. identifying the arrangement of the slots (5S) of the brackets (5) in the representation,
f. exporting of data for the arrangement of the slots (5S) from the data processing apparatus,
g. generating a baking form (11) for the shape-memory wire, wherein in the baking form with the aid of the data wire fixing sections (13) are generated which hold the wire in areas corresponding to the slots (5S) during the baking,
h. introducing the wire into the baking form and
i. baking the wire,
wherein for step c) into the target set-up a strip of light is projected that shows the focusing level of the optics for generating the photo and the strip of light is projected into the level of the slots, whereby the slots (5S) in the representation are shown for sharp reading.

2. Process according to claim 1, **characterized in that** in step a) a target set-up of plaster or a virtual target set-up is generated.

3. Process according to claim 1 or 2, **characterized in that** in step b) lingual brackets are arranged on the teeth to be treated of the target set-up.

4. Process according to one of the preceding claims, **characterized in that** in step c) the two-dimensional photo is generated using a camera having an optics.

5. Process according to claim 1 or 4, **characterized in that** in step c) a digital photo is made as the representation.

6. Process according to one of the preceding claims, **characterized in that** in step d) a digital photo or a scan of an analog photo is loaded into the data processing apparatus.

7. Process according to one of the preceding claims, **characterized in that** a computer, especially a desk top PC is used as the data processing apparatus.

8. Process according to one of the preceding claims, **characterized in that** the identification in step e) is made by hand or automatically, especially with the aid of morphing algorithms.

9. Process according to one of the preceding claims, **characterized in that** after the identifying in step e) the position of at least one slot (5S) in the occlusal plane is changed by hand, especially towards mesial, distal, lingual or buccal, by rotation or combinations thereof.

10. Process according to one of the preceding claims, **characterized in that** after the identifying in step e) the length of at least one slot is increased or decreased mesially and/or distally.

11. Process according to one of the preceding claims, **characterized in that** the exporting in step f) is writing the data into a computer file.

12. Process according to one of the preceding claims, **characterized in that** in step g) a baking form is generated of a metal plate, especially of steel or of aluminum.

13. Process according to claim 12, **characterized in that** in step 1g) the wire fixing sections for the wire are milled into the metal plate and between adjacent wire fixing sections a free space each for the wire is milled, in which the wire is not held.

14. Process according to claim 13, **characterized in that** the floors of the wire fixing sections and the floors of the free spaces are milled to the same height, whereby the wire can be laid into the baking form flat.

15. Process according to one of the preceding claims, **characterized in that** the wire in step h) is laid into the baking form by hand.

## Revendications

1. Procédé de conformage d'un fil orthodontique (1) à partir d'un matériau à mémoire de forme pour lui conférer une géométrie idéale et ainsi en faciliter l'introduction dans un appareil orthodontique spécifique au patient, comprenant les étapes suivantes :
a. Réalisation d'une empreinte idéale spécifique au patient de la mâchoire supérieure ou inférieure du patient,
b. Placement des supports (5) sur les dents à traiter dans l'empreinte idéale,
c. Réalisation d'une photographie bidimensionnelle en tant qu'image 2D de l'empreinte idéale avec des supports (5) en vue de dessus,
d. Saisie de l'image dans un système de traitement de données,
e. Identification de l'emplacement des fentes (5S) des supports (5) sur la figure,
f. Exportation de données de l'emplacement des fentes (5S) à partir du système de traitement de données,
g. Réalisation d'un moule (11) pour le fil à mémoire de forme, dans lequel des sections de fixation de fil (13) sont produits dans le moule de cuisson à l'aide des données, sections qui maintiennent le fil dans les zones correspondant aux fentes (5S) pendant le processus de cuisson,
h. Insertion du fil dans le moule de cuisson et
i. Cuisson du fil dans lequel une bande lumineuse est projetée dans l'empreinte idéale pour l'étape c), bande lumineuse qui montre le plan local de l'optique pour la réalisation de la photo, et la bande lumineuse est projetée dans le plan des fentes, ce qui permet de clairement représenter les fentes (5S) sur la figure.

2. Procédé selon la revendication 1, **caractérisé en ce qu'**une empreinte idéale de plâtre ou une empreinte idéale virtuelle sont réalisées à l'étape a).

3. Procédé selon la revendication 1 ou la revendication 2, **caractérisé en ce que**, à l'étape b), des supports linguaux sont disposés sur les dents de l'empreinte idéale à traiter.

4. Procédé selon l'une des revendications précédentes, **caractérisé en ce que** dans l'étape c) la photo bidimensionnelle est produite en utilisant une caméra avec un système optique.

5. Procédé selon la revendication 1 ou la revendication 4, **caractérisé en ce qu'**une photo numérique est produite comme image à l'étape c).

6. Procédé selon l'une des revendications précédentes, **caractérisé en ce que** dans l'étape d), une photo numérique ou un balayage d'une photo analogique sont chargées dans le système de traitement de données.

7. Procédé selon l'une des revendications précédentes, **caractérisé en ce qu'**un ordinateur, en particulier un ordinateur de bureau, est utilisé comme système de traitement de données.

8. Procédé selon l'une des revendications précédentes, **caractérisé en ce que** l'identification à l'étape e) est effectuée manuellement ou automatiquement, notamment à l'aide d'algorithmes de morphing.

9. Procédé selon l'une des revendications précédentes, **caractérisé en ce qu'**après l'identification à l'étape e), la position d'au moins une fente (5S) dans le plan occlusal est modifiée à la main, notamment dans la direction mésiale, distale, linguale ou buccale, par rotation ou des combinaisons de celles-ci.

10. Procédé selon l'une des revendications précédentes, **caractérisé en ce que**, après l'identification à l'étape (i), la longueur d'au moins une fente est augmentée ou réduite dans la direction mésiale et/ou distale.

11. Procédé selon l'une des revendications précédentes, caractérisé en ce dans lequel l'exportation à l'étape f) consiste à écrire des données dans un fichier d'ordinateur.

12. Procédé selon l'une des revendications précédentes, **caractérisé en ce que** à l'étape g), un moule de cuisson est réalisé à partir d'une plaque métallique, en particulier en acier ou en aluminium.

13. Procédé selon la revendication 12, **caractérisé en ce qu'**à l'étape g), les sections de fixation de fil pour le fil sont fraisées dans la plaque métallique et qu'à chaque fois un espace libre pour le fil est fraisé entre des sections voisines de fixation de fil, tandis que le fil n'est pas maintenu.

14. Procédé selon la revendication 13, **caractérisé en ce que** les fonds des sections de fixation de fil et les fonds des espaces libres sont fraisés à la même hauteur, de sorte que le fil peut être inséré directement dans le moule de cuisson.

15. Procédé selon l'une des revendications précédentes, **caractérisé en ce que** le fil est inséré dans le moule de cuisson à la main à l'étape h).
